# EUROPEAN PATENT APPLICATION

(11) **EP 2 237 102 A1**
(43) Date of publication of application: **06.10.2010**
(21) Application number: 08873592.3
(22) Date of filing: 09.12.2008
(51) Int. Cl.: G02F 1/1333, G02F 1/1335, G02F 1/13357, F21Y 101/02

(54) **LIQUID CRYSTAL DISPLAY DEVICE**

(30) Priority: 25.03.2008 JP 2008076932
(71) Applicant: Sharp Kabushiki Kaisha, Osaka-shi, Osaka 545-8522 (JP)
(72) Inventor: KOMANO, Masakazu, Osaka-shi, Osaka 545-8522 (JP)
(74) Representative: Müller-Boré & Partner Patentanwälte
(86) International application number: PCT/JP2008/072294
(87) International publication number: WO 2009/118960

(57) **Abstract**

Display qualities of a liquid crystal panel are prevented from being deteriorated by lugs formed on a light conductor plate. A liquid crystal display device (1) is configured by attaching constituting elements, such as a liquid crystal panel (10), a reflecting plate (12), a light conductor plate (13), a diffusion sheet (14), a first lens sheet (15) and a second lens sheet (16), on a chassis (11). On one side of the light conductor plate (13), a light incoming section (22) for receiving light from a light source LED (19) is formed. At the periphery of the light conductor plate (13), lugs (23a, 23b) to be engaged with the chassis (11) are formed, and recessed sections (24a, 24b) to be engaged with the lugs (23a, 23b) are formed on the chassis (11). The lug (23a) close to the light incoming section (22) is at a position where incoming light is not directly applied.

## Description

### Technical Field

The present invention relates to liquid crystal display devices.

### Background Art

Liquid crystal display devices are widely used in various kinds of electronic equipment including information communication equipment such as personal computers and cellular phones. Since liquid crystal display devices are not luminous, they are generally equipped with a backlight. In compact gadgets such as cellular phones, their backlights often employ a light conductor plate which receives light at one end thereof and emits the light through a light-outgoing surface, which coincides with the largest surface thereof. Typically, a light source of the backlight is an LED. Examples of such a liquid crystal display device equipped with a backlight are disclosed in Patent Documents 1 and 2.

Patent Document 1 discloses a liquid crystal display device provided with a planner light-emitting unit in which a light conductor plate that guides light from white LEDs and a reflector plate are accommodated in a casing.

Patent Document 2 discloses a liquid crystal display device in which a light conductor plate that receives light from LEDs through a side thereof is held between a first display panel and a second display panel so that one light conductor plate simultaneously illuminates two display panels.
Patent Document 1: JP-A-2007-178463
Patent Document 1: JP-A-2007-148048

### Disclosure of the Invention

### Problems to be Solved by the Invention

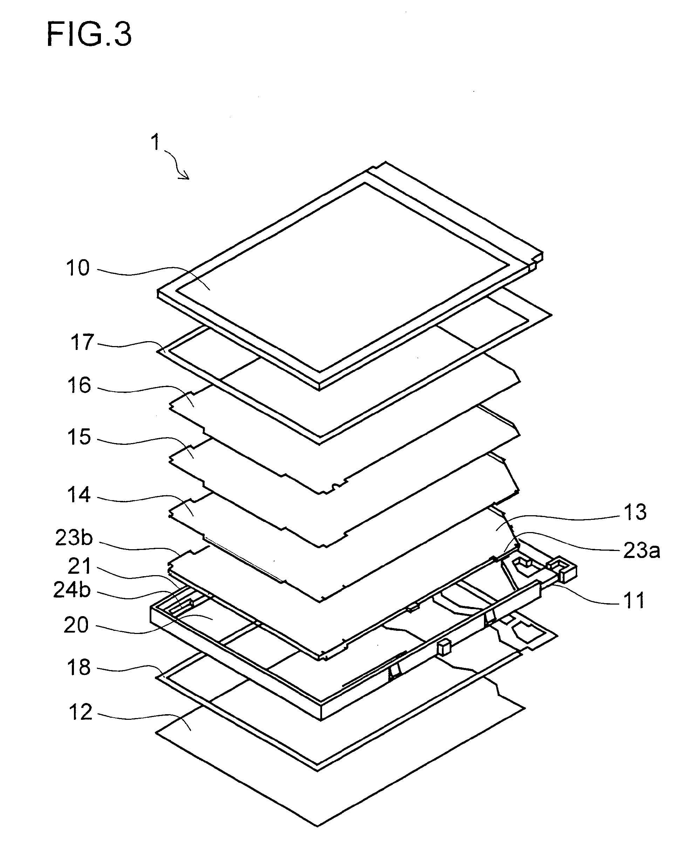

Liquid crystal display devices equipped with a backlight often adopt a structure in which components are assembled into a frame-shaped chassis (a "casing" in Patent Document 1, and a "frame" in Patent Document 2). Examples of a conventional structure of such a liquid crystal display device are shown in Figs. 3 to 6.

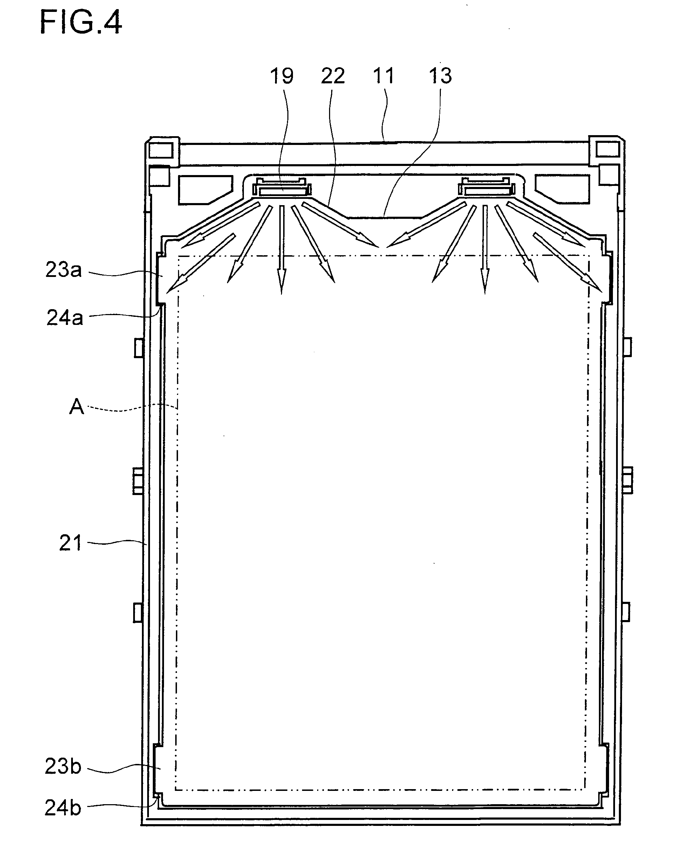

As its components, a liquid crystal display device 1 includes the following: a liquid crystal panel 10, a chassis 11, a reflector plate 12, a light conductor plate 13, a diffusion sheet 14, a first lens sheet 15, a second lens sheet 16, a first masking double-faced adhesive tape 17, a second masking double-faced adhesive tape 18, and two light source LEDs 19 (see Fig. 4) mounted on the chassis 11. In the present specification, when reference is made with respect to the vertical disposition, "upper" denotes the upper side in Fig. 3, and "lower" denotes the lower side in Fig. 3.

The chassis 11 is formed of a synthetic resin which is shaped into a rectangular frame as seen in a plan view. The chassis 11 has an opening 20 in its inner part, and has a parapet 21 at its periphery. Within the opening 20, the light conductor plate 13 is held; within the parapet 21, the liquid crystal panel 10 is held, which has a size larger than the light conductor plate 13 as viewed in a plan view.

The light conductor plate 13 receives light emitted from the light source LEDs 19 through a light incoming section formed on one side of the light conductor plate 13, and emits the light through a light-outgoing surface, which coincides with the largest surface, thereof to illuminate the liquid crystal panel 10 from behind. The light-outgoing surface is treated to be provided with a light deflection function. Such treatment is generally applied to a light conductor plate for backlighting in liquid crystal panels, and no detailed description of the treatment will be given.

The light conductor plate 13 is rectangular as seen in a plan view; at one shorter side of the four sides of its periphery, a plurality of light incoming sections 22 are formed. The light incoming section 22 is a bulged section of a trapezoid as seen in a plan view, and two light incoming sections 22 are provided to correspond to the number of the light source LEDs 19. The top of the trapezoid consists of a short straight-line part that is parallel to the other shorter side of the light conductor plate 13, and this part is arranged to face a light emitting section of a light source LED 19.

At several places on the periphery of the light conductor plate 13, a lug is formed. The arrangement is as shown in Fig. 4; two lugs are formed on each of the two longer sides. At each of the longer sides, one lug 23a is formed close to the shorter side where the light incoming section 22 exists, and the other lug 23b is formed close to the shorter side where no light incoming section 22 exists. The lugs 23a and 23b engage with recessed sections 24a and 24b, respectively, that are formed at the rim of the opening 20 of the chassis 11. Engagement of the lugs 23a and 23b with the recessed sections 24a and 24b as described above allows the light conductor plate 13 to be positioned accurately with respect to the chassis 11 and to be held by the chassis 11 without it falling down through the opening 20.

The diffusion sheet 14, the first lens sheet 15, and the second lens sheet 16 have a size approximately equal to that of the light conductor plate 13, and they are stacked to be placed on the light conductor plate 13 after the light conductor plate 13 is held within the opening 20 of the chassis 11. The height of the upper surface of the second lens sheet 16 that comes to the topmost is approximately equal to that of the upper surface of the chassis 11 excluding the parapet 21.

After the light conductor plate 13, the diffusion sheet 14, the first lens sheet 15, and the second lens sheet 16 are stacked, the liquid crystal panel 10 is affixed to the chassis 11 with the frame-shaped first masking double-faced adhesive tape 17. This prevents components from the light conductor plate 13 to the second lens sheet 16 from coming upward off the chassis 11, and thus they are fixed in the chassis 11. Here, the parapet 21 serves to position the liquid crystal panel 10 placed on the chassis 11.

The reflector plate 12 is fixed to the lower surface of the chassis 11 with the second masking double-faced adhesive tape 18. The fitting process of the reflector plate 12 can be before or after the fitting process of the components arranged on the upper side of the chassis 11.

In Fig. 4, a region A enclosed by a dash-double dot line is a display region of the liquid crystal panel 10. When the two light source LEDs 19 are lit, light entered through the light incoming section 22 diffuses in the entire light conductor plate 13. Owing to the above-mentioned treatment for changing the direction of light, light emits through the entire light-outgoing surface of the light conductor plate 13 and passes through the diffusion sheet 14, the first lens sheet 15, and the second lens sheet 16 to shine the liquid crystal panel 10 from behind.

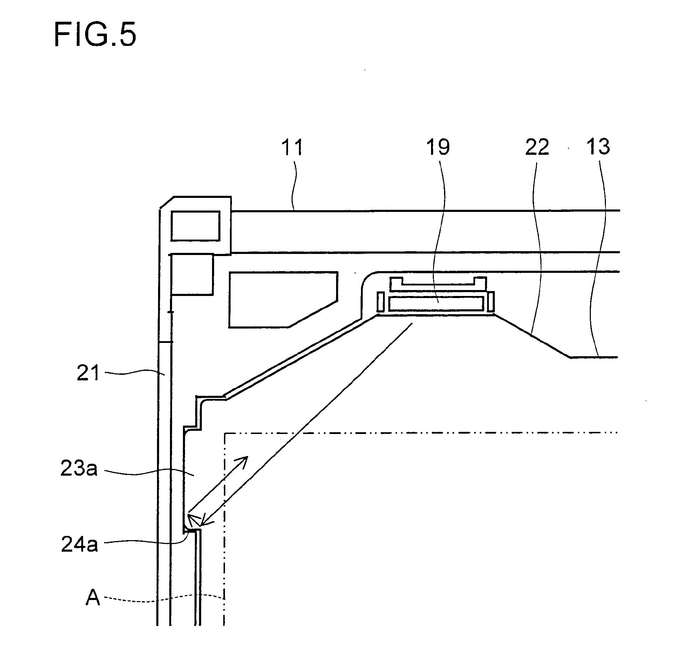

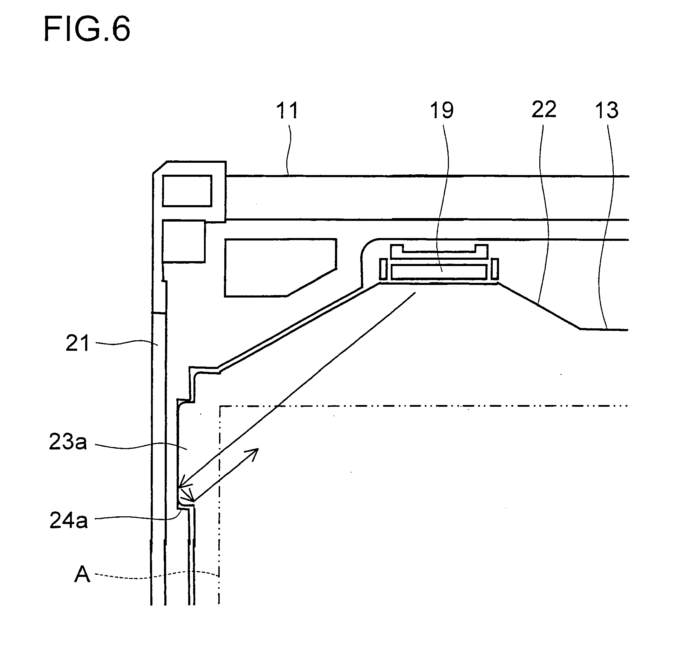

The liquid crystal display device 1 described above suffers from the following problem; specifically, part of light that has entered through the light incoming section 22 directly shines the lug 23a arranged at a place close to the light incoming section 22. Light that has entered the lug 23a is reflected at a corner part of the lug 23a as shown in Fig. 5 or 6, and intense reflection leaks into the display region A. Thus, a fractional portion of an end part of the display region A becomes brighter and the uniformity of brightness of the liquid crystal panel 10 is spoiled, resulting display quality deterioration of the liquid crystal panel 10.

The present invention has been devised in view of the above problem. An object of the invention is to prevent the display quality of a liquid crystal panel from being deteriorated by a lug formed on a light conductor plate.

### Means for Solving the Problem

To achieve the above object, according to the present invention, a liquid crystal display device has a light conductor plate for backlighting arranged on a rear side of a liquid crystal panel, the light conductor plate having a light incoming section formed on one side thereof. Here, the light conductor plate is held by a chassis, a lug to be engaged with the chassis is formed at several places on a periphery of the light conductor plate, and, of lugs at the several places, a lug located at a place close to the light incoming section is arranged at a position where it is not directly exposed to incident light.

With this structure, because the lug is not exposed directly to the incident light through the incoming section, and the lug catches only small part of the light diffused in the entire light conductor plate as incident light on it, intense reflection from the lug and leakage of the reflection into the display region of the liquid crystal panel are avoided.

Moreover, according to the invention, in the liquid crystal display device described above, the lug located at the place close to the light incoming section is arranged at a position overlapping with a masking double-faced adhesive tape for fixing the liquid crystal panel to the chassis.

With this structure, even if some light reflection occurs inside the lug, it is covered by the masking double-faced adhesive tape, and hence the display quality of the liquid crystal panel is not adversely affected.

### Advantages of the Invention

According to the present invention, since a lug formed in a light conductor plate is not directly exposed to incident light through a light incoming section, intense reflection from the lug and leakage of the reflection into the display region of the liquid crystal panel are avoided, and hence the display quality of the liquid crystal panel is not spoiled.

### Brief Description of Drawings

[Fig. 1] An exploded perspective view of components of a liquid crystal display device according to the present invention.
[Fig. 2] A plan view of the liquid crystal display device shown in Fig. 1, in its state with a light conductor plate fitted to a chassis.
[Fig. 3] An exploded perspective view of components of a conventional liquid crystal display device.
[Fig. 4] A plan view of the liquid crystal display device shown in Fig. 3, in its state with a light conductor plate fitted to a chassis.
[Fig. 5] An enlarged view of a part shown in Fig 4.
[Fig. 6] Another enlarged view of a part shown in Fig. 4, showing a state different from that shown in Fig. 5.

### List of Reference Symbols

- 1: liquid crystal display device
- 10: liquid crystal panel
- 11: chassis
- 12: reflecting plate
- 13: light conductor plate
- 14: diffusion sheet
- 15: first lens sheet
- 16: second lens sheet
- 17: first masking double-faced adhesive tape
- 18: second masking double-faced adhesive tape
- 19: light source LED
- 22: light incoming section
- 23a, 23b: lug
- 24a, 24b: recessed section

### Best Mode for Carrying Out the Invention

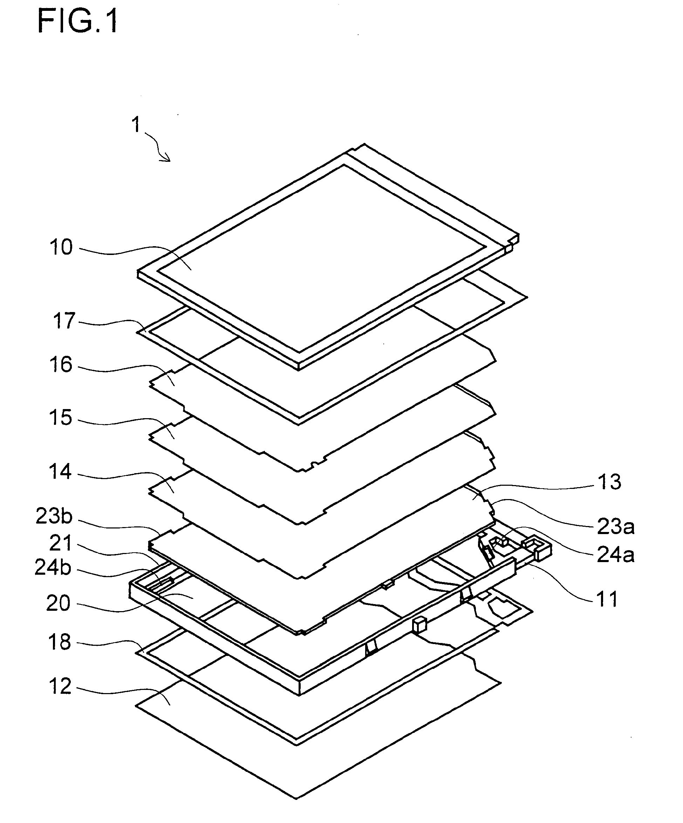

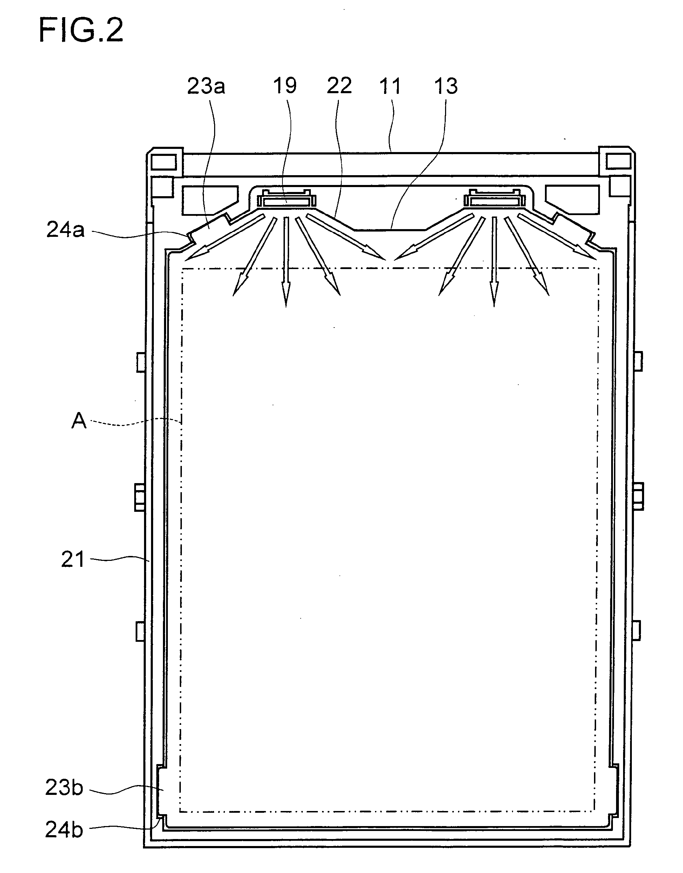

A first embodiment of the present invention is shown in Figs. 1 and 2. In describing the embodiment, such components as find their counterparts in a conventional structure shown in Figs. 3 to 6 are identified by common reference signs used in Figs. 3 to 6, and no detailed description of them will be repeated.

In the present invention, what differs from the conventional structure is the position of a lug 23a located at a place close to a light incoming section 22. The lug 23a is arranged at a position where it is not exposed to light entering through the light incoming section. In the embodiment, one of the two oblique sides of the light incoming section 22, the two sides give the section a fan shape, is selected as the location of the lug 23a. The selected side is closer to the longer side of the light conductor plate 13 than the other, and the lug 23a is arranged approximately at the middle of it. The position of the recessed section 24a is also changed together with the lug 23a.

Since the lug 23a is at the position described above, it is not exposed to light entering through the light incoming section 22. Therefore, intense reflection from the lug 23a, particularly from its corner, and leakage of the reflection into the display region A of the liquid crystal panel 10, are avoided, and hence the display quality of the liquid crystal panel 10 is not spoiled. Moreover, even if some light reflection occurs inside the lug 23a, it is covered by a masking double-faced adhesive tape 17, and hence the display quality of the liquid crystal panel 10 is not adversely affected.

Although the embodiment of the present invention is described above, it is to be understood that many other modifications and variations are possible within the scope of the present invention.

### Industrial Applicability

The present invention finds wide application in liquid crystal display devices with relatively small dimensions and equipped with a backlight.

## Claims

1. A liquid crystal display device having a light conductor plate for backlighting arranged on rear side of a liquid crystal panel, the light conductor plate having a light incoming section formed on one side thereof,
wherein
the light conductor plate is held by a chassis,
a lug to be engaged with the chassis is formed at several places on a periphery of the light conductor plate, and
of lugs at the several places, a lug located at a place close to the light incoming section is arranged at a position where the lug is not directly exposed to incident light.

2. The liquid crystal display device according to claim 1,
wherein the lug located at the place close to the light incoming section is arranged at a position overlapping with a masking double-faced adhesive tape for fixing the liquid crystal panel to the chassis.
